# EUROPEAN PATENT SPECIFICATION

(11) **EP 0 675 658 B1**
(45) Date of publication and mention of the grant of the patent: **08.09.1999**
(21) Application number: 95302160.7
(22) Date of filing: 30.03.1995
(51) Int. Cl.: H04N 11/16, H04N 9/64

(54) **Adaptive type color demodulation apparatus for pal system**
Adaptive Farbdemodulationsvorrichtung für PAL-System
Appareil de démodulation de la couleur du type adaptif pour le système PAL

(30) Priority: 31.03.1994 JP 6191694
(43) Date of publication of application: 04.10.1995
(73) Proprietor: MATSUSHITA ELECTRIC INDUSTRIAL CO., LTD., Kadoma-shi, Osaka 571-8501 (JP)
(72) Inventor: Hatano, Takahisa, Sapporo-shi, Hokkaido 003 (JP)
(74) Representative: Crawford, Andrew Birkby

(56) References cited:
- DE-A- 2 615 023
- DE-A- 3 931 903
- GB-A- 2 169 772
- PATENT ABSTRACTS OF JAPAN vol. 13 no. 123 (E-733) ,27 March 1989 & JP-A-63 292793 (VICTOR CO OF JAPAN) 30 November 1988,

## Description

### BACKGROUND OF THE INVENTION

### (1)Field of the Invention

The present invention relates to an adaptive type color demodulation apparatus which demodulates two kinds of color difference-signals from a PAL system chrominance signal.

### (2)Description of the Prior Art

A PAL system has a merit which can cancell a hue error due to an influence of the transmission distortion. Because an R-Y signal, one of two kinds of color difference signals, is transmitted, being inverted with its phase at every scanning line, a hue error of a chrominance signal is cancelled by demodulating the chrominance signal using an operation between scanning lines at the receiver side. In this color demodulator, a 1H delay device is used for an operation between scanning lines. Here, 1H means a horizontal period. In another type of color demodulator, no delay device is used and color signals are demodulated at every scanning line like in an NTSC system and a hue error between adjacent scanning lines is cancelled by an integral effect of eyes.

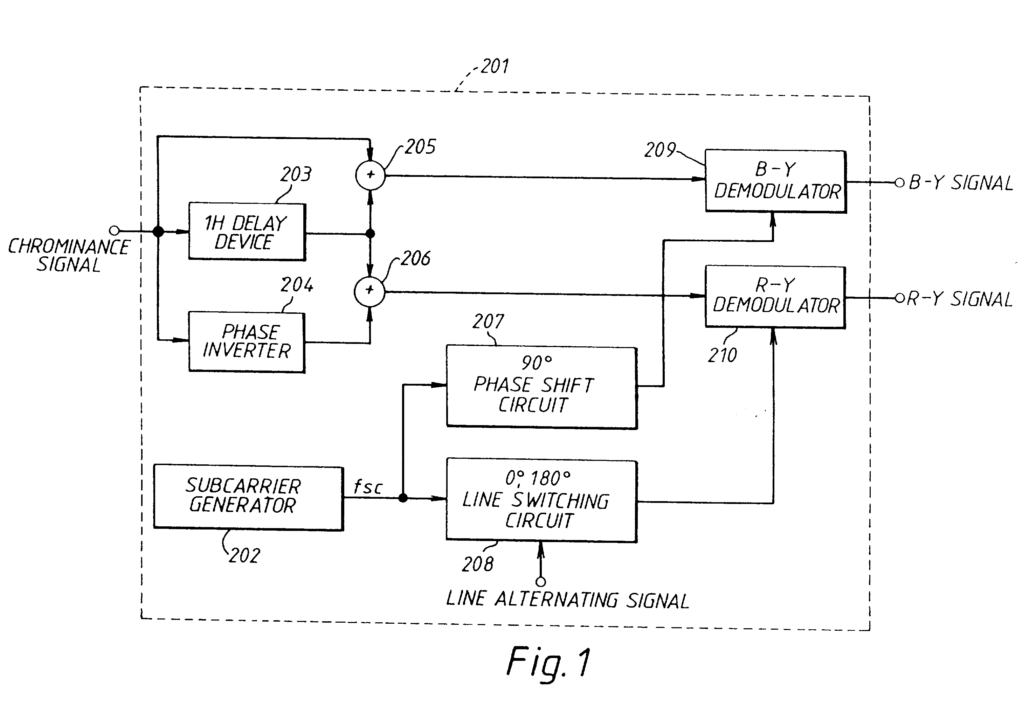

A block diagram of a color demodulation apparatus for PAL system using a delay device in accordance with the prior art is shown in FIG.1.

An input chrominance signal is delayed by 1H at a 1H delay device 203. The input chrominance signal and the 1H delayed chrominance signal are added at a first adder 205. In a PAL system, because the phase of an (R-Y) signal component is inverted at every scanning line, the modulated (R-Y) signal components on adjacent scanning lines are cancelled each other at the first adder 205 and only a (B-Y) signal component is always outputted. The chrominance signal is phase inverted at a phase inverting circuit 204 and is added to the 1H delayed chrominance signal at a second adder 206. At the second adder 206, the (B-Y) signal components on the adjacent scanning lines are cancelled each other and only an (R-Y) signal component is outputted. A subcarrier generator 202 generates a subcarrier signal (4.43MHz) synchronized with a burst signal included in the input composite color television signal and the subcarrier signal is phase shifted by 90 degrees at a phase shift circuit 207 and is inputted to a (B-Y) demodulator 209 together with a modulated (B-Y) signal from the first adder 205 and the (B-Y) signal is outputted. The subcarrier signal is inverted at every scanning line at a line switching circuit 208. In PAL system, the burst signal alternates its phase by +135 degrees and -135 degrees against the reference axis (B-Y) at every scanning line. A line alternating signal is generated, based on the compared result between the phases of a burst signal and the subcarrier signal. At the line switching circuit 208, the subcarrier signal is phase shifted by 180 degrees at every scanning line, synchronizing with the line alternating signal. The output of the line switching circuit 208 is inputted to an (R-Y) demodulator 210 together with the modulated (R-Y) signal which is an output of the second adder 206 and an (R-Y) signal is outputted. This color demodulation method can cancel the phase distortion of the chrominance signal which occurs during transmission, by means of an operation between scanning lines.

This color demodulation method is called PAL-D.

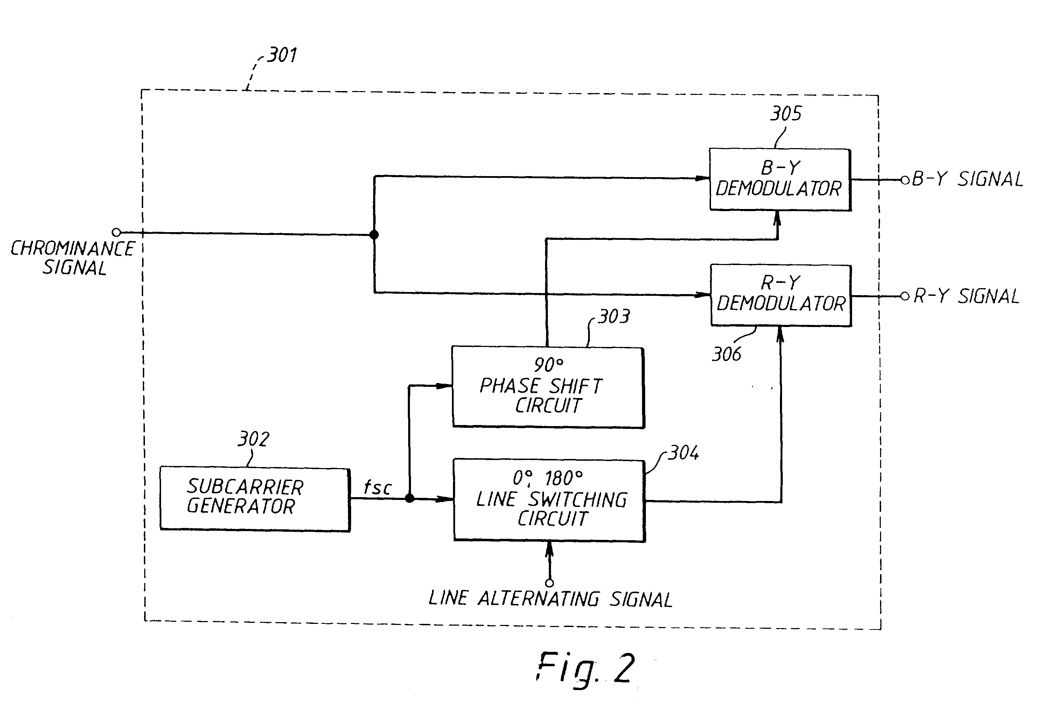

A block diagram of another type color demodulation apparatus for PAL system, in which a delay device is not used, in accordance with the prior art is shwon in FIG.2.

A subcarrier generator 302, a phase shift circuit 303, a line switching circuit 304, a (B-Y) demodulator 305 and an (R-Y) demodulator 306 perform similarly to the blocks having the same names, 202, 207, 208, 209 and 210 in FIG.1, respectively.

This color demodulation method does not use a 1H delay device and can cancel a hue error between the two signals on the adjacent scanning lines by utilizing an integral effect of eyes.

This color demodulation method is called PAL-S.

A color demodulation apparatus using a delay device, however, has a problem that if there is no correlation between the signals on the adjacent scanning lines, correct color demodulation is not made, because an operation is made between adjacent scanning lines. Another color demodulation apparatus not using a delay device has a problem that when a phase error increases, a Venetian blind interference appears on the screen.

A PAL signal chrominance decoder is disclosed in DE-A-3931903 in which an incoming PAL signal is separated into a luminance signal and a chrominance signal by line comb filtering. The chrominance signal is derived by standard PAL decoder from three successive lines by utilizing two 1H delays if there is no detected colour change between successive lines whereas, if there is such a colour change, the chrominance signal is derived by a simple PAL decoder from only a single line.

The present invention provides an adaptive type color demodulation apparatus for PAL system comprising:
luminance and chrominance signal separator for separating a received PAL system composite color television signal into a luminance signal and a chrominance signal;
first color demodulation means for demodulating said PAL system chrominance signal between scanning lines, that is PAL-D color demodulation means;
second color demodulation means for demodulating said PAL system chrominance signal in every line, that is PAL-S color demodulation means;
vertical correlation detecting means (7) for detecting a vertical correlation between successive lines; and
selecting means (5) for selecting either an output of said first color demodulation means or an output of said second color demodulation means according to a detected result of said vertical correlation detecting means, characterised in that the vertical correlation detecting means (7) is arranged to detect vertical correlation between two said luminance signals which are apart by one horizontal period.

The present invention offers an adaptive type color demodulation apparatus for PAL system which the hue distortion of a chrominance signal which occurs during transmission is cancelled even if the phase distortion is large and can demodulate a chrominance signal with high accuracy even if there is no correlation between signals on the adjacent scanning lines.
FIG. 1 is a block diagram of a color demodulation apparatus for PAL system, in which a delay device is used, in accordance with the prior art;
FIG. 2 is a block diagram of another color demodulation apparatus for PAL systems, in which no delay device is used, in accordance with the prior art;
FIG. 3 is a block diagram of an adaptive type color demodulation apparatus for PAL system in accordance with a second exemplary embodiment of the present invention; and
FIG. 4 is a block diagram of a vertical correlation detector used in an adaptive type color demodulation apparatus for PAL system in accordance with the second exemplary embodiment of the present invention.

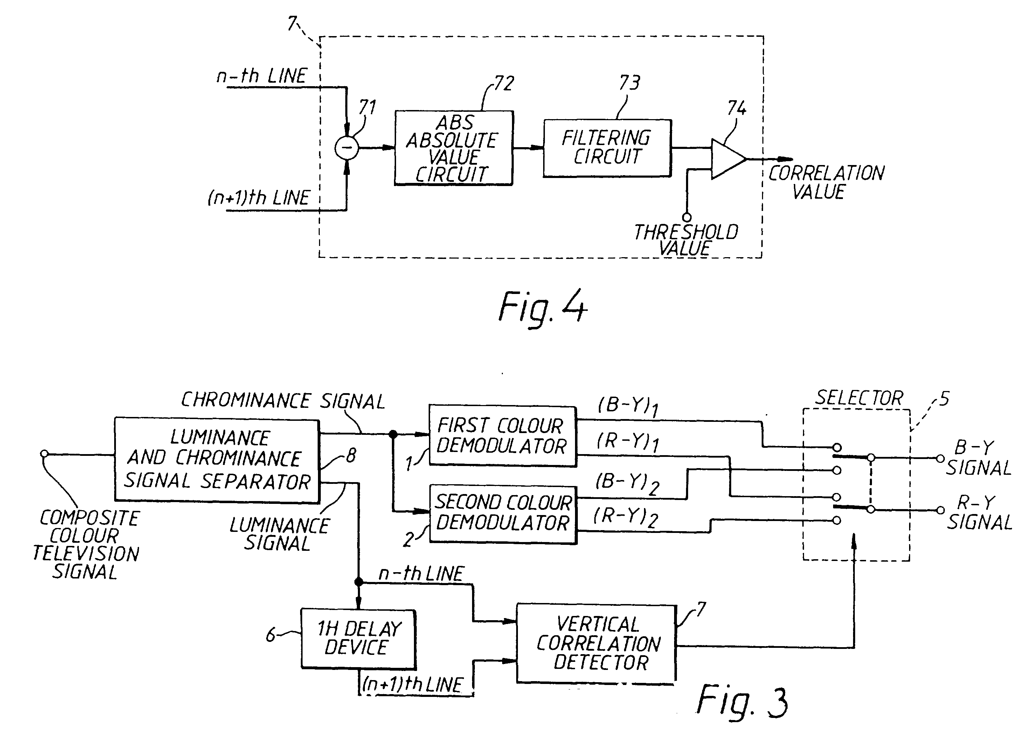

A block diagram of an adaptive type color demodulation apparatus for PAL system in accordance with an embodiment of the present invention is shown in FIG.3.

A first color demodulator 1 is the same as a block diagram shown in FIG.1 having a 1H delay device, that is a PAL-D color demodulator. A second color demodulator 2 is the same as a block diagram shown in FIG.2 having no delay device, that is a PAL-S color demodulator.

An input PAL chrominance signal is demodulated at the first color demodulator 1 and two kinds of color difference signals, (B-Y)1 and (R-Y)1 are outputted from the first color demodulator 1. According to the method using an 1H delay device, color difference signals which the hue distortion occuring during signal transmission is cancelled are obtained.

A second color demodulator 2 is the same as a block diagram shown in FIG.2 having no delay device and is a PAL-S color demodulator. The input PAL chrominance signal is demodulated at the second color demodulator 2 and two kinds of color difference signals, (B-Y)2 and (R-Y)2 are outputted from the second color demodulator 2.

A block diagram of a vertical correlation detecting circuit 7 is shown in FIG.4

A luminance signal separated from the input composite color television signal at a luminance and chrominance signal separator 8 is delayed by 1H period at a 1H delay device 6. An original luminance signal on the n-th scanning line and another luminance signal delayed by 1H period from the original luminance signal on the (n+1)th scanning line are added at an adder 71.

The output signal of the adder 71 is converted to an absolute value at an absolute value circuit 72 and then, the absolute value is filtered at a filtering circuit 73 and an average value is obtained at the output of the filtering circuit 73. The average value is compared with a designated threshold value at a comparator 74 and a correlation value is outputted from the comparator 74 to the selector 5.

If there is a correlation between both signals, the added result is zero. If there is no correlation between both signals, the added result has a value. Thus, whether a correlation exsists or not can be detected according to the added result. When the signals are detected to have no correlation, the color demodulation method using an 1H delay device can not correctly demodulate and some interference appears on the screen. Therefore, if they are detected to have no correlation, the selector 5 selects an output of the second color demodulator 2 and if they are detected to have a correlation, the selector 5 selects an output of the first color demodulator 1. Thus, better color difference signals, R-Y and B-Y are outputted from the selector 5.

Here, a character that if there is a correlation in chrominance signals, there is a correlation also in luminance signals is utilized.

According to the embodiment of the present invention, a color demodulation apparatus for PAL system can be offered wherein the hue distortion of the chrominance signal which occurs during signal transmission is cancelled even if the phase distortion is large and a precise color signal is demodulated even if there is no correlation between adjacent scanning lines.

## Claims

1. An adaptive type color demodulation apparatus for PAL system comprising:
luminance and chrominance signal separator (8) for separating a received PAL system composit color television signal into a luminance signal and a chrominance signal;
first color demodulation means (1) for demodulating said PAL system chrominance signal between scanning lines, that is PAL-D color demodulation means;
second color demodulation means (2) for demodulating said PAL system chrominance signal in every line, that is PAL-S color demodulation means;
vertical correlation detecting means (7) for detecting a vertical correlation between successive lines;
and selecting means (5) for selecting either an output of said first color demodulation means or an output of said second color demodulation means according to a detected result of said vertical correlation detecting means, characterised in that the vertical correlation detecting means (7) is arranged to detect vertical correlation between two said luminance signals which are apart by one horizontal period.

## Patentansprüche

1. Adaptive Farbdemodulationsvorrichtung für ein PAL-System mit:
einem Luminanz-/Chrominanzsignal-Trenner (8) zum Trennen eines empfangenen zusammengesetzten PAL-System-Farbfernsehsignals in ein Luminanzsignal und ein Chrominanzsignal,
einer ersten Demodulationseinrichtung (1) zum Demodulieren des PAL-System-Chrominanzsignals zwischen Abtastzeilen, wobei die Demodulationseinrichtung (1) eine PAL-D-Farbdemodulationseinrichtung ist,
einer zweiten Farbdemodulationseinrichtung (2) zum Demodulieren des PAL-System-Chrominanzsignals in jeder Zeile, wobei die Farbdemodulationseinrichtung (2) eine PAL-S-Farbdemodulationseinrichtung ist,
einer Vertikalkorrelation-Feststellungseinrichtung (7) zum Feststellen einer Vertikalkorrelation zwischen aufeinanderfolgenden Zeilen, und
einer Auswahleinrichtung (5) zum Auswählen von entweder einer Ausgabe der ersten Farbdemodulationseinrichtung oder einer Ausgabe der zweiten Farbdemodulationseinrichtung in Übereinstimmung mit einem Feststellungsergebnis der Vertikalkorrelation-Feststellungseinrichtung, dadurch gekennzeichnet, daß die Vertikalkorrelation-Feststellungseinrichtung (7) angeordnet ist, um eine Vertikalkorrelation zwischen den zwei Luminanzsignalen festzustellen, die durch eine horizontale Periode voneinander getrennt sind.

## Revendications

1. Appareil de démodulation de la couleur du type adaptatif pour le système PAL comprenant :
un séparateur de signal de luminance et de chrominance (8) pour séparer un signal de télévision couleur composite du système PAL reçu en un signal de luminance et en un signal de chrominance ;
un premier moyen de démodulation de la couleur (1) pour démoduler ledit signal de chrominance du système PAL entre des lignes de balayage, c'est-à-dire un moyen de démodulation de la couleur PAL-D ;
un second moyen de démodulation de la couleur (2) pour démoduler ledit signal de chrominance du système PAL dans chaque ligne, c'est-à-dire un moyen de démodulation de la couleur PAL-S ;
un moyen de détection de la corrélation verticale (7) pour détecter une corrélation verticale entre des lignes successives ;
un moyen de sélection (5) pour sélectionner soit une sortie dudit premier moyen de démodulation de la couleur soit une sortie dudit second moyen de démodulation de la couleur selon un résultat détecté dudit moyen de détection de la corrélation verticale, caractérisé en ce que le moyen de détection de la corrélation verticale (7) est disposé pour détecter une corrélation verticale entre deux dits signaux de luminance qui sont séparés par une période horizontale.
